# EUROPEAN PATENT SPECIFICATION

(11) **EP 1 630 979 B1**
(45) Date of publication and mention of the grant of the patent: **24.12.2008**
(21) Application number: 04020157.6
(22) Date of filing: 25.08.2004
(51) Int. Cl.: H04B 7/26

(54) **Method and system for updating clocks in components of a communications network**
Verfahren und System zur Taktuhrenaktualisierung in Komponenten eines Kommunikationsnetzwerks
Procédé et système pour la mise à jour des horloges dans des composants d'un réseau de communications

(43) Date of publication of application: 01.03.2006
(73) Proprietor: Nokia Siemens Networks GmbH & Co. KG, 81541 München (DE)
(72) Inventor: Dauerer, Jörg, 82194 Gröbenzell (DE); Merz, Peter, 81373 München (DE); Phillips, Ian Lasseter, Romsey, Hants SO51 8PN (GB); Schopp, Michael, Dr., 81827 München (DE); Zuck, Josef-Peter, 85551 Kirchheim/Heimstetten (DE)

(56) References cited:
- WO-A-00/51366
- WO-A-02/073851
- US-B1- 6 532 274
- US-B1- 6 542 754

## Description

### Field of the invention

The invention is used in communications networks where systems have to be synchronised in order to perform a synchronised action.

### Summary of the invention

Today's communications networks comprise of a number of systems that can in turn consist of a number of remote (distributed) units placed around a central one. Very often several such remote units have to be synchronised in order to perform a synchronised action. This is the case for example for remote transceiver units of central base stations in mobile communication systems like GSM (Global System for Mobile Communication) or UMTS (Universal Mobile Telecommunication System), where all the transceiver units need to perform actions at exactly the same time. For example in UMTS when two antennas are located in the same sector it is necessary to have synchronous transmission for transmission diversity, this means that the transceivers of these two antennas must perform the required action within less than 100 nanoseconds (ns) of each other.

This synchronisation requires that a frame signal is received at all the remote units at exactly the same time. Usually the remote units are connected to a central unit, which transmits the frame signal. In most complex systems, like base stations, packet or cell oriented interfaces between the separate units are preferred, since they are more flexible than traditional streaming interfaces and are usually cheaper to implement, due to the use of common of the shelf products like Ethernet interfaces.

However, due to the non deterministic nature of the packet interfaces all packets experience a random delay when the connection between the central unit and the remote units is implemented via a packet oriented interface. At the instant when a certain packet is ready to be transmitted, other packets may be in the queue for transmission ahead of the certain packet, or they may be in the state of being currently transmitted. Assuming an average packet size of 100bytes and a connection implemented using Gigabit Ethernet (i.e. the data rate is 1Gbits/s), the random delay is between 0 and 800 ns (assuming that only a single packet is ahead of the certain packet ready for transmission).

Since the frame information needed for synchronisation also has to be transmitted via the packet oriented interface, those packets also experience a random delay. The consequence of this is that no exact time reference is available at the remote units. Simply moving the frame packets to the front of the queue for the respective link by implementing priority scheduling does not solve the problem, since the delay caused by packets which are currently being transmitted can not be prevented.

Currently two types of solution to this problem are available.

The first solution uses a streaming based interface or a circuit switched interface with a fixed frame structure instead of a packet oriented one. Such an available interface is the Common Public Radio Interface (CPRI), (CPRI Specification V 1.0 2003-09-30). This fixed frame structure allows the transmission of a system and of a frame clock which is then used by the remote units for an exact synchronisation. In this way a number of remote units can synchronously perform an action. The disadvantage of this solution is that such interfaces are more expensive because they have to be specifically developed and designed for a certain product only e.g. a UMTS or GSM base station, which therefore precludes the interoperability of one product in a different system due to the different system requirements present.

The second solution uses separate physical connections for the data and clock transmissions between the central unit and the remote units. The physical connection for the clock transmission is used for system and frame clock transmission. The remote units then synchronise to the received clock information. The disadvantage of this solution is that the increase in number of separate physical connections has as a consequence the actual increase of the number of wires that are used in the backplanes that connect the central unit to the remote units, thus making the system more complex to construct and more expensive. Additionally, it makes the location of the remote units (usually several 100 meters away from the central unit) more difficult. Typically remote units interfaces are connected via optical fibres, additional wiring would then require additional laser transmitters and receivers to be installed. Thus further increasing the cost of the system.

US 6 542 754 discloses a synchronisation method using a GPS signal.

In view of the drawbacks that exist in the prior art, a need therefore exists for a solution that can provide a precise synchronisation mechanism between a central unit and remote units using commercially available interfaces that do not use a fixed frame structure to function in a variety of network products without having to invest in expensive custom built solutions and in an increase in the infrastructure of the system.

It is an object of the invention to provide a method for allowing the synchronisation of remote units to a central unit without investing in expensive custom built solutions. A further object of the invention is to provide a system and a base station that utilise the above method thereof.

The present invention provides a method for clock synchronisation in a communications network between a central unit and at least two remote units, as disclosed by the method steps of claim 1.

The present invention further provides a system, in a communications network, having means adapted for clock synchronisation between a central unit and at least two remote units according to claim 4.

The advantages of the above are that they allow for the clock synchonisation between units to be performed efficiently in a timely manner and without having to implement an interface specifically designed for the synchronisation procedure.

Further advantages to avoid any delays in the transmission of the clock synchronisation message, that would have the effect of causing the remote units to update their respective local clocks but still not be synchronised, the scheduling of transmission of user data is blocked for a time period prior to the transmission of the clock synchronisation message. Whereby the period of time that transmission is blocked for corresponds to a maximum possible delay incurred by messages when they are being transmitted. In this way, the clock synchronisation messages that are transmitted are guaranteed to be the only messages being processed within the system and will not be delayed by other messages.

### Short description of the drawings

The present invention may be understood more readily, and various other aspects and features of the invention may become apparent from consideration of the following description and accompanying figures which are given by way of illustration only, and thus are not limitative of the present invention, and wherein:
Fig. 1, shows a block diagram of an embodiment of the invention, when used in a base station within a communications network.
Fig. 2, is a flowchart displaying the steps carried out by the method of the invention.

### Detailed description of the invention

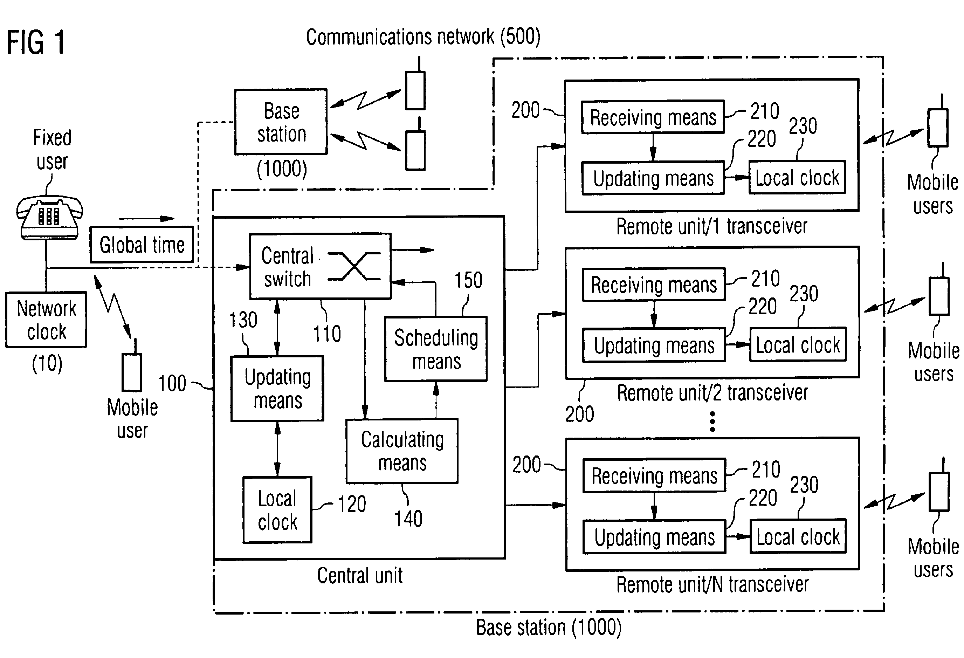

As can be seen in fig.1, which is an illustrative embodiment of the invention, the system consists of a central unit 100 which contains a central packet switch 110 and a local clock 120 and a number of remote units 200, each remote unit also having a local clock 230. In this embodiment, all units are co-located within a base station 1000, however the units do not have to be co-located, as in the case for example of a mobile switching centre synchronising the local clocks of base stations. The base station in turn is part of a communications network 500. Within the communications network there exists a network clock 10 which provides a timing reference in the form of a global time to all units within the network.

In particular, there are occasions when it is necessary for two or more remote units to perform a synchronised action. This means that the action has to be performed at exactly the same time by all the remote units. In effect the action has to be performed within a required time frame, otherwise the synchronised action will not be possible. A synchronised action can be for example the simultaneous transmission of one message by two or more remote units to different recipients as in the case of broadcasting. In order to achieve this synchronised action within the required time frame, it is necessary to maintain the same time for all local clocks which are located at the remote units. This is due to the fact that the local clocks at each remote unit can drift, thus causing each remote unit to have a different time.

However, when transmitting a clock synchronisation message other messages may be in the process of being transmitted to the remote units or waiting to be transmitted to the remote units, which will cause a delay in the transmission of the clock synchronisation message and therefore also the arrival of the clock synchronisation message to remote units. Resulting in that the remote units will not have the same time on their respective local clocks.

In order to ensure that all remote units have the same time, the invention proposes a method whereby the clocks on the remote units are synchronised with the one on the central unit. The local clock 120 on the central unit is a highly accurate and stable voltage controlled oven quartz and when the central unit 100 receives a global time transmitted from a network clock 10 located within communications network 500, it will update its respective local clock 120. Upon reception of the global time, the central unit performs a calculation in order to calculate the regularity of reception of a transmitted global time. The calculated regularity of reception, corresponds e.g. to the periodicity of receiving the global time. Having calculated the regularity of reception, it is then possible for the central unit to derive the exact time that the remote units have to be synchronised with the central unit's local clock. The exact time of synchronisation of the remote units, being the time of reception of the global time. The central unit will then schedule to transmit the clock synchronisation message at the predetermined time.

Separate scheduling for the synchronisation of the remote units is necessary in order to ensure that the remote units have synchronised clocks. Simply forwarding the message containing the global time to the remote units, does not ensure this. It does not take into account the fact that this message can be delayed by other messages being transmitted. As a consequence this will lead the remote units having clocks that are out of phase with the central clock and with each other. Therefore synchronised actions can't be performed by the remote units.

The invention proposes to block the transmission of all other messages apart from the clock synchronisation messages. In order to ensure that when the clock synchronisation message is transmitted it will not experience any delays, the central unit will schedule to begin blocking the transmission of all other messages for a time period before the scheduled time for transmitting the clock synchronisation message.

Furthermore, due to the non-deterministic nature of the interfaces that connect the central unit to the remote units, all messages that are transmitted will experience a random delay. However the maximum delay that can occur is known, and by ensuring that the blocking time period before transmission corresponds to this maximum, transmitted clock synchronisation messages will not experience this delay, thus ensuring that the local clocks on each remote unit have the same time.

The central unit 100 which together with the remote units/transceivers are located within a base station 1000 which is part of communications network 500, comprises of a central switch 110 which receives and transmits messages from the network to mobile users and vice versa. The central unit comprises of a local clock 120, updating means 130, calculating means 140 and scheduling means 150. Upon receiving a clock synchronisation update in the form of a message containing the global time, transmitted by a network clock 10 located within communications network 500, the central switch 110 will pass the message containing the global time to the updating means 130 which in turn will update the local clock 120. Having done this the central switch 110 will notify the calculating means 140 of the time of arrival of the message containing the global time. The calculating means 140 in turn, based on the information provided will calculate the regularity with which a message containing the global time is received at the central unit. The result of the calculation is then forwarded to the scheduling means 150, which uses it in order to schedule the transmission of clock synchronisation messages from the central switch 110 to the remote units 200.

The scheduling means 150 also perform all the necessary scheduling for the transmission of other messages as well, and are not limited to only scheduling the transmission of the clock synchronisation messages.

Additionally, the scheduling means 150 also have the necessary information relating to the maximum delay that messages can experience when being transmitted. Using this information, the scheduling means 150 do not schedule any transmission of other messages for a time period that corresponds to the maximum possible delay that messages can experience when being transmitted, prior to the transmission of the clock synchronisation messages. Thus, effectively the transmission of non clock synchronisation messages is blocked for that time period and the central switch 110 will only transmit the required clock synchronisation messages.

In this way, upon receiving the clock synchronisation messages at their receiving means 210 each remote unit 200 has updating means 220 to update its respective local clock 230, and consequently all local clocks 230 will have the same local time. The remote units also comprise of transmitting means that enable them to transmit messages to users as well as to the central unit. These are not shown in the figure as they consist of known in the art components.

Thus, any time shift that might occur to a local clock 230 due to drifting in a remote unit 200 is corrected and all clocks will be in phase. Enabling synchronised actions to be performed by the remote units.

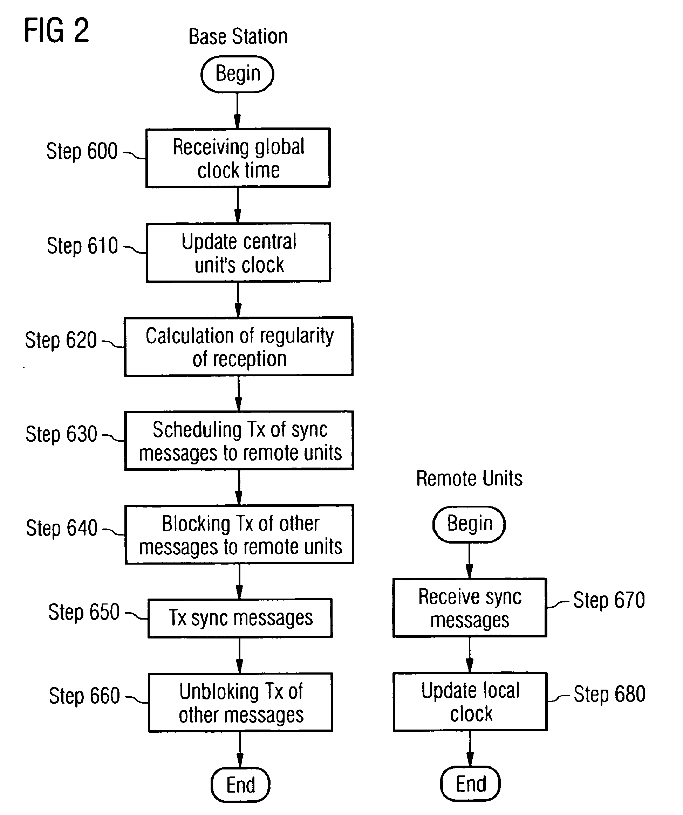

The steps that are carried out by the method, are shown in fig.2.

In step 600, the central unit of the base station receives a message from the network clock containing the global clock time. Upon receiving the message, the central unit will update its respective local clock in step 610, and calculate the regularity of reception of the message containing the global clock time in step 620. Once the regularity of reception has been calculated, the central unit will schedule, in step 630, the transmission of clock synchronisation messages to the remote units. In step 640, the central unit will block the transmission of other messages to the remote units for a time period prior to the scheduled transmission of the clock synchronisation messages. In step 650, the central unit transmits the synchronisation messages to the remote units and then proceeds to step 660, whereby the transmission of other messages is unblocked.

In step 680, the remote units receive the synchronisation messages and in step 690 update their respective local clocks.

Although the invention has been described in terms of a preferred embodiment described herein, those skilled in the art will appreciate other embodiments and modifications which can be made based on the disclosure of the present invention, without departing from the scope of the invention which is determined by the scope of the patent claims appended hereto.

## Claims

1. A method for clock synchronisation in a communications network (500) between a central unit (100) and at least two remote units (200), all units respectively having a local clock (120, 230), comprising the steps of:
(a) updating (610) upon reception (600) of a global time from a network clock (10) by said central unit (100), of its respective local clock (120) with said global time;
(b) calculating (620) upon reception (600) of said global time at said central unit (100), a regularity of reception of said global time at said central unit (100) based on a time of arrival of said global time;
(c) scheduling (630) at said central unit (100), on the basis of said regularity, the transmission of a clock synchronisation message to said at least two remote units (200) from said central unit (100);
(d) blocking (640), by said central unit (100), scheduling of a transmission of other messages to said at least two remote units (200) for a time period prior to the transmission of said synchronisation message when scheduling (630) the transmission of said clock synchronisation message to said at least two remote units (200),
(e) transmitting (650) said clock synchronisation message to said at least two remote units (200),
(f) updating (690) upon reception (680) of said clock synchronisation message by each one of said at least two remote units (200), of their respective local clocks (230).

2. A method according to claim 1, wherein the time period that said transmission of said other messages to said at least two remote units (200) by said central unit (100) is blocked (640) for, corresponds to a maximum possible delay incurred by messages within said central unit (100) prior to being transmitted by said central unit (100).

3. A method according to claim 1 or 2, wherein said regularity of reception corresponds to periodicity of receiving said global time.

4. A system, for use in a communications network (500), having means adapted for clock synchronisation between a central unit (100) and at least two remote units (200), all units respectively having a local clock (120, 230), comprising:
(a) updating means (130) at said central unit (100) adapted upon reception of a global time from a network clock (10), to update its respective local clock (120) with said global time;
(b) calculating means (140) at said central unit (100) adapted upon reception of said global time at said central unit (100), to calculate a regularity of reception of said global time at said central unit (100) based on a time of arrival of said global time;
(c) scheduling means (150) at said central unit (100), adapted to schedule on the basis of said regularity the transmission of a clock synchronisation message to said at least two remote units (200) from said central unit (100), wherein when said scheduling means (150) schedule the transmission of said clock synchronisation message to said at least two remote units (200), said scheduling means (150) are further adapted to block a transmission of other messages to said at least two remote units (200) for a time period prior to the transmission of said synchronisation message by said central unit (100), and wherein said central unit (100) is adapted to transmit said clock synchronisation message to said at least two remote units (200);
(d) updating means (220) at each one of said at least two remote units (200), adapted upon reception of said clock synchronisation message, to update their respective local clocks (230).

5. A system according to claim 4, wherein the time period that said transmission of said other messages to said at least two remote units (200) by said central unit (100) is blocked for by said scheduling means (150), corresponds to a maximum possible delay incurred by messages within said central unit (100) prior to being transmitted by said central unit (100).

6. A system according to claim 4, wherein the central unit (100) and the at least two remote units (200) are co-located and form a base station (1000).

## Patentansprüche

1. Verfahren zur Taktsynchronisation in einem Kommunikationsnetz (500) zwischen einer Zentraleinheit (100) und mindestens zwei entfernten Einheiten (200), wobei alle Einheiten jeweils einen lokalen Taktgeber (120, 230) aufweisen, umfassend die Schritte des:
(a) Aktualisierens (610) bei Empfang (600) einer Globalzeit aus einem Netztaktgeber (10) durch die Zentraleinheit (100) ihres jeweiligen lokalen Taktgebers (120) mit der Globalzeit;
(b) Berechnens (620) bei Empfang (600) der Globalzeit an der Zentraleinheit (100) einer Empfangsregelmäßigkeit der Globalzeit an der Zentraleinheit (100) auf Grundlage einer Ankunftszeit der Globalzeit;
(c) Planens (630) an der Zentraleinheit (100) auf Grundlage dieser Regelmäßigkeit der Übertragung einer Taktsynchronisationsnachricht zu den mindestens zwei entfernten Einheiten (200) von der Zentraleinheit (100);
(d) Blockierens (640) durch die Zentraleinheit (100) des Planens einer Übertragung anderer Nachrichten zu den mindestens zwei entfernten Einheiten (200) für eine Zeitperiode vor der Übertragung der Synchronisationsnachricht beim Planen (630) der Übertragung dieser Taktsynchronisationsnachricht zu den mindestens zwei entfernten Einheiten (200),
(e) Übertragens (650) der Taktsynchronisationsnachricht zu den mindestens zwei entfernten Einheiten (200),
(f) Aktualisierens (690) bei Empfang (680) der Taktsynchronisationsnachricht durch jede der mindestens zwei entfernten Einheiten (200) ihrer jeweiligen lokalen Taktgeber (230).

2. Verfahren nach Anspruch 1, wobei die Zeitperiode, für die die Übertragung der anderen Nachrichten zu den mindestens zwei entfernten Einheiten (200) durch die Zentraleinheit (100) blockiert (640) ist, einer maximal möglichen Verzögerung entspricht, die Nachrichten in der Zentraleinheit (100) vor ihrer Übertragung zu der Zentraleinheit (100) fahren.

3. Verfahren nach Anspruch 1 oder 2, wobei die Empfangsregelmäßigkeit der Periodizität des Empfangens der Globalzeit entspricht.

4. System zur Verwendung in einem Kommunikationsnetz (500) mit Mitteln zur Taktsynchronisation zwischen einer Zentraleinheit (100) und mindestens zwei entfernten Einheiten (200), wobei alle Einheiten jeweils einen lokalen Taktgeber (120, 230) aufweisen, umfassend:
(a) Aktualisierungsmittel (130) an der Zentraleinheit (100) zum Aktualisieren bei Empfang einer Globalzeit von einem Netztaktgeber (10) ihres jeweiligen lokalen Taktgebers (120) mit dieser Globalzeit;
(b) Berechnungsmittel (140) an der Zentraleinheit (100) zum Berechnen bei Empfang der Globalzeit an der Zentraleinheit (100) einer Empfangsregelmäßigkeit der Globalzeit an der Zentraleinheit (100) auf Grundlage einer Ankunftszeit der Globalzeit;
(c) Planungsmittel (150) an der Zentraleinheit (100) zum Planen auf Grundlage der Regelmäßigkeit der Übertragung einer Taktsynchronisationsnachricht zu den mindestens zwei entfernten Einheiten (200) von der Zentraleinheit (100), wobei, wenn das Planungsmittel (150) die Übertragung der Taktsynchronisationsnachricht zu den mindestens zwei entfernten Einheiten (200) plant, das Planungsmittel (150) weiterhin zum Blockieren einer Übertragung anderer Nachrichten zu den mindestens zwei entfernten Einheiten (200) für eine Zeitperiode vor der Übertragung der Synchronisationsnachricht durch die Zentraleinheit (100) eingerichtet ist und wobei die Zentraleinheit (100) zum Übertragen der Taktsynchronisationsnachricht zu den mindestens zwei entfernten Einheiten (200) eingerichtet ist;
(d) Aktualisierungsmittel (220) an jeder der mindestens zwei entfernten Einheiten (200) zum Aktualisieren bei Empfang der Taktsynchronisationsnachricht ihrer jeweiligen lokalen Taktgeber (230).

5. System nach Anspruch 4, wobei die Zeitperiode, für die die Übertragung der anderen Nachrichten zu den mindestens zwei entfernten Einheiten (200) durch die Zentraleinheit (100) durch das Planungsmittel (150) blockiert ist, einer maximal möglichen Verzögerung entspricht, die Nachrichten in der Zentraleinheit (100) vor ihrer Übertragung durch die Zentraleinheit (100) erfahren.

6. System nach Anspruch 4, wobei die Zentraleinheit (100) und die mindestens zwei entfernten Einheiten (200) sich am gleichen Standort befinden und eine Basisstation (1000) bilden.

## Revendications

1. Procédé pour la synchronisation d'horloges dans un réseau de communications (500) entre une unité centrale (100) et au moins deux unités distantes (200), toutes les unités possédant respectivement une horloge locale (120, 230), comprenant les étapes de :
(a) mise à jour (610), lors de la réception (600) d'un temps global provenant d'une horloge de réseau (10) par ladite unité centrale (100), de son horloge locale respective (120) avec ledit temps global ;
(b) calcul (620), lors de la réception (600) dudit temps global au niveau de ladite unité centrale (100), d'une régularité de réception dudit temps global au niveau de ladite unité centrale (100) sur la base d'un temps d'arrivée dudit temps global ;
(c) programmation (630), au niveau de ladite unité centrale (100), sur la base de ladite régularité, de la transmission d'un message de synchronisation d'horloge auxdites au moins deux unités distantes (200) par ladite unité centrale (100) ;
(d) blocage (640) par ladite unité centrale (100) de la programmation d'une transmission d'autres messages auxdites au moins deux unités distantes (200) pendant une période de temps précédant la transmission dudit message de synchronisation au moment de la programmation (630) de la transmission dudit message de synchronisation d'horloge auxdites au moins deux unités distantes (200),
(e) transmission (650) dudit message de synchronisation d'horloge auxdites au moins deux unités distantes (200),
(f) mise à jour (690), lors de la réception (680) dudit message de synchronisation d'horloge par chacune desdites au moins deux unités distantes (200), de leurs horloges locales respectives (230).

2. Procédé selon la revendication 1, dans lequel la période de temps pendant laquelle ladite transmission desdits autres messages auxdites au moins deux unités distantes (200) par ladite unité centrale (100) est bloquée (640) correspond à un délai possible maximum subi par les messages à l'intérieur de ladite unité centrale (100) avant d'être transmis par ladite unité centrale (100).

3. Procédé selon la revendication 1 ou 2, dans lequel ladite régularité de réception correspond à une périodicité de réception dudit temps global.

4. Système destiné à être utilisé dans un réseau de communications (500), comprenant un moyen adapté pour la synchronisation d'horloge entre une unité centrale (100) et au moins deux unités distantes (200), toutes les unités possédant respectivement une horloge locale (120, 230), comprenant :
(a) un moyen de mise à jour (130) au niveau de ladite unité centrale (100), adapté pour mettre à jour, lors de la réception d'un temps global provenant d'une horloge de réseau (10), son horloge locale respective (120) avec ledit temps global ;
(b) un moyen de calcul (140) au niveau de ladite unité centrale (100), adapté pour calculer, lors de la réception dudit temps global au niveau de ladite unité centrale (100), une régularité de réception dudit temps global au niveau de ladite unité centrale (100) sur la base d'un temps d'arrivée dudit temps global ;
(c) un moyen de programmation (150) au niveau de ladite unité centrale (100), adapté pour programmer, sur la base de ladite régularité, la transmission d'un message de synchronisation d'horloge auxdites au moins deux unités distantes (200) par ladite unité centrale (100), dans lequel, lorsque ledit moyen de programmation (150) programme la transmission dudit message de synchronisation d'horloge auxdites au moins deux unités distantes (200), ledit moyen de programmation (150) est adapté, en outre, pour bloquer une transmission d'autres messages auxdites au moins deux unités distantes (200) pendant une période de temps précédant la transmission dudit message de synchronisation par ladite unité centrale (100) et dans lequel ladite unité centrale (100) est adaptée pour transmettre ledit message de synchronisation d'horloge auxdites au moins deux unités distantes (200) ;
(d) un moyen de mise à jour (220) au niveau de chacune desdites au moins deux unités distantes (200), adapté pour mettre à jour, lors de la réception dudit message de synchronisation d'horloge, leurs horloges locales respectives (230).

5. Système selon la revendication 4, dans lequel la période de temps pendant laquelle ladite transmission desdits autres messages auxdites au moins deux unités distantes (200) par ladite unité centrale (100) est bloquée par ledit moyen de programmation (150) correspond à un délai possible maximum subi par les messages à l'intérieur de ladite unité centrale (100) avant d'être transmis par ladite unité centrale (100).

6. Système selon la revendication 4, dans lequel l'unité centrale (100) et les au moins deux unités distantes (200) sont co-localisées et forment une station de base (1000).
